Europäisches Patentamt

European Patent Office

Office européen des brevets

(19)

(11) **EP 0 747 184 A2**

(12) **EUROPÄISCHE PATENTANMELDUNG**

(43) Veröffentlichungstag:
11.12.1996 Patentblatt 1996/50

(51) Int. Cl.⁶: **B27K 3/34**, B27K 5/00

(21) Anmeldenummer: 96109210.3

(22) Anmeldetag: 07.06.1996

(84) Benannte Vertragsstaaten:
DE ES FR GB IT

(30) Priorität: 08.06.1995 DE 19520906

(71) Anmelder:
• Feinchemie GmbH Sebnitz
D-01855 Sebnitz (DE)
• Syntec Gesellschaft für Chemie und
Technologie der Informationsaufzeichnung mbH
06766 Wolfen (DE)

(72) Erfinder:
• Böttcher, Horst, Prof. Dr.
01169 Dresden (DE)
• Kallies, Karl-Heinz
01855 Sebnitz (DE)
• Unger, Achim, Dr.
16225 Eberswalde (DE)
• Eisbein, Manfred
01665 Scharfenberg (DE)

(74) Vertreter: Hertz, Oliver
v. Bezold & Partner,
Brienner Strasse 52
80333 München (DE)

(54) **Schutz- und Konsolidierungsmittel für nachwachsende Rohstoffe**

(57) Ein Schutz- und Konsolidierungsmittel für nachwachsende Rohstoffe, insbesondere Holz und andere lignocellulosehaltige Werkstoffe, enthält modifizierte Metalloxid-Organosole. Die Modifizierung der Metalloxidsole kann durch Mischung unterschiedlicher Metalloxide, durch den Zusatz von hydrolysierter, organisch substituierter Trialkoxysilane oder durch die Zugabe von bioziden Verbindungen, z.B. von Borsäure und deren Salzen, erfolgen, wodurch deren Auslaugbeständigkeit verbessert wird. Die Mittel können im Holzschutz für den langzeitigen Schutz gegen Schadorganismen, gegen korrosive Medien und Feuer, zur Versiegelung und Maskierung der Oberfläche sowie zur Restaurierung bei gleichzeitiger dauerhafter Dimensionsstabilisierung und Verfestigung eingesetzt werden. Ein modifiziertes Material aus nachwachsenden Rohstoffen auf der Basis von Stärke, Cellulose und/oder deren Abbauprodukten, enthält als Modifizierungsmittel eine Behandlungssubstanz, die durch ein Metalloxid-Organosol gebildet wird.

EP 0 747 184 A2

**Beschreibung**

Die Erfindung betrifft Schutz- und Konsolidierungsmittel für Holz und andere lignocellulosehaltige Werkstoffe. Die Erfindung betrifft ferner ein modifiziertes Material aus Rohstoffen, die durch einen biologischen Wachstunsvorgang gebildet werden (sog. "nachwachsende Rohstoffe"), wobei das modifizierte Material aus einem Rohstoff auf der Basis von Stärke, Cellulose und/oder deren Abbauprodukten und einer Behandlungssubstanz besteht und vorzugsweise zur Herstellung biologisch abbaubarer Formteile und Dämmstoffe genutzt wird, sowie ein Verfahren zur Herstellung des modifizierten Materials.

Kommerzielle Holzschutzmittel haben sich in der täglichen Praxis zu einer Quelle zunehmender Umweltbelastung entwickelt, da sie in beträchtlichen Mengen Restlösungsmittel und Schadstoffe enthalten, die in die Umwelt abgegeben werden. Bisher eingesetzte Holzschutzmittel auf der Basis löslicher anorganischer Wirkstoffe gewährleisten keinen dauerhaften vorbeugenden Schutz, da sie nicht auslaugbeständig sind und eine stark verzögerte Wirksamkeit aufweisen. Die gegenwärtig verwendeten, bekämpfend und/oder vorbeugend biologisch wirksamen organischen Biozide wie synthetische Pyrethroide oder Triazole werden schlecht an die Holzkomponenten fixiert, so daß von den so behandelten Hölzern eine beträchtliche human- und ökotoxikologische Gefährdung ausgeht.

Holzkonsolidierungsmittel (oder Formgebungs- und -erhaltungsmittel) basieren auf natürlichen hochmolekularen Verbindungen wie Knochen- oder Hautleim, Gelatine, Casein sowie Ölen, Wachsen, Cellulose-Derivaten. Der Verfestigungsgrad, der durch solche Mittel erreicht wird, ist jedoch im allgemeinen nur gering und die Wasserlöslichkeit und Quellbarkeit der genannten natürlichen Polymere von Nachteil. Verbesserte Konsolidierungseffekte erreicht man durch synthetische Polymere, z.B. auf Basis von Formaldehyd-, Epoxid- und Polyester-Harzen, Polyacryl- oder Polymethacryl-Verbindungen und Polyurethanen. Die Anwendung derartiger Konsolidierungsmittel weist eine Reihe von Nachteilen auf, z.B. beträchtlicher Gehalt an Restlösungsmittel und organischen Schadstoffen (z.B. Restmonomere, Weichmacher, Formaldehyd), Anwendung z.T. nur durch Lösen in toxischen organischen Lösungsmitteln, häufig unerwünschte Glanzeffekte, geringe Holzschutzwirkung. Im Falle der Nutzung der hochmolekularen Naturprodukte und synthetischen Polymere als Maskierungsmittel in der Holzrestaurierung zeigt sich außerdem, daß eine Verhinderung der Migration und des Ausgasens von Alt-Holzschutzmitteln mit Wirkstoffen wie DDT, Lindan, Pentachlorphenol u.a. unvollständig und nur im zeitlich eng begrenztem Rahmen verhindert wird. Bedingt durch die genannten Probleme beim Einsatz natürlicher und organischer Polymerer im Holzschutz gibt es seit einiger Zeit Bemühungen, anorganische Polymere zur Holzkonsolidierung einzusetzen.

Ein erster Schritt in diese Richtung war, Polysiloxane (oder die entsprechenden Tetraalkoxy-silane als Precursoren) oder Siliconharze zur Dimensionstabilisierung und Verfestigung des Holzes einzusetzen (vgl. z.B. DE-OS 3222963).Zur Modifizierung der Eigenschaften kann man Organopolysiloxane durch Si-C-gebundene Alkenylgruppen ( DE-0S 2903376) modifizieren, oder Alkoxytrialkoxysilane als Precursoren verwenden (DE-OS 3900303). Die Nachteile der Polysiloxane bestehen in der Verwendung von z.T. nicht mit Wasser mischbaren umweltschädigenden Lösungsmitteln und der starken Hydrophobie der Schichten, was häufig zu Haftproblemen bei der Beschichtung führt. Damit ist eine geringe Eindringtiefe verbunden und eine Stabilisierung des Holzes nur in oberflächennahen Bereichen, was zu einer unzureichenden Verbesserung der physikalisch- mechanischen und biologischen Eigenschaften führt.

Ein weiterer Schritt zur Nutzung anorganischer Polymerer zum Schutz des Holzes gegen Feuer besteht im Einsatz reiner Metalloxide bzw. von Siliciumdioxid. Aufgrund der Schwerlöslichkeit dieser Verbindungen können diese Verbindungen nur in stark alkalischer Lösung oder als Dispersion eingesetzt werden. Es ist bekannt, alkalisch lösliche Silicate (z.B. Wasserglas) als brandhemmende Mittel einzusetzen, jedoch werden durch die stark alkalischen Lösungen sowohl die Holzsubstanz als auch evtl. darüber liegende Farbschichten stark angegriffen. Weiterhin besteht die Möglichkeit, Metalloxid-Dispersionen (z.B. $SiO_2$, $TiO_2$) als Überzüge zu nutzen, indem diese in geringen Mengen organische Bindemitteln wie Alkydharzen (DE-OS 3918980) oder Naturölen (EP 0291877) oder Wasserglas (EP 0457516) zugesetzt werden. Allerdings handelt man sich durch den Einsatz der im Überschuß verwendeten organischen Bindemittel bzw. Wasserglas die oben erwähnten Nachteile ein.

Neben den erwähnten Mängeln besteht ein beträchtlicher Nachteil der Holzkonsolidierungsmittel darin, daß sie im allgemeinen die physikalisch-mechanischen Eigenschaften des Holzes verbessern, aber keine bioziden Wirkungen aufweisen, die vor tierischen und pflanzlichen Schädlingungen schützen.

Aus DE-PS 43 29 279 ist die Herstellung antimikrobiellen Materials bekannt, bei dem mit antimikrobiellen Substanzen beladene Metalloxidgelschichten auf verschiedenen Verpackungsmaterialien, so auch auf als Träger verwendetem Holz, gebildet werden, um einen konservierenden Einfluß auf die verpackten Materialen durch langsamen Austritt der antimikrobiellen Substanzen auf die benachbarten Materialien zu nehmen. Die dafür entwickelten Substanzen eigneten sich jedoch nicht als Holzschutzmittel.

Es ist ferner bekannt, daß die Herstellung, Verarbeitung und Entsorgung von Werkstoffen aus nachwachsenden Rohstoffen ein großes ökologisches Interesse besitzt. Hierbei nutzt man Polysaccharide in Form von Cellulose, Stärke und deren Abbauprodukte, die man z.B. aus Holz-, Getreide-, Faser- oder anderen Kulturpflanzen, aus schnellwachsenden Gräsern wie Miscanthus sinensis oder aus wiederverwertbaren Sekundärrohstoffen wie Altpapier gewinnt. Aussichtsreiche Anwendungen sind aufgrund ihrer biologischen Abbaubarkeit Produkte (z.B. Formteile oder Dämmstoffe) für die Lebensmittelverpackung und den Lebensmittelservice, für den Gartenbau und die Landwirtschaft sowie für die Verpackungs- und Bauindustrie.

Ein großes Problem für den Einsatz derartiger Materialien besteht in der Empfindlichkeit gegenüber Feuchtigkeit und mechanischer Beanspruchung sowie gegenüber Pilz- und Schädlingsbefall, wodurch die allgemeine Verwendbarkeit von Materialien aus nachwachsenden Rohstoffen stark eingeschränkt wird. Es gibt darum intensive Bemühungen, nachwachsende Rohstoffe gegen die genannten Schädigungen zu schützen. Hierbei gibt es die Möglichkeit, entweder die Oberfläche des Formteils aus nachwachsenden Rohstoffen zu verändern oder den Rohstoff mit hydrophobierenden Zusätzen zu mischen. Bekanntestes Beispiel zur Veränderung der Oberfläche von Formteilen aus nachwachsenden Rohstoffen sind natürliche und synthetische Mittel zur Oberflächenbehand- lung des Holzes in Gestalt von Wachsen, Naturharzen, Teer, Leinöl bzw. synthetischen Polymerlacken. Derartige Behandlungen haben bislang den Nachteil, daß sie im Falle einer hohen wasser- abweisenden Wirkung zu einer unzureichenden biologischen Abbaubarkeit führen, häufig nicht für den Kontakt mit Nahrungsmitteln zugelassen sind und meist in mit Wasser nicht mischbaren organischen Lösungsmittel appliziert werden, wodurch sie sich zu einer Quelle beträchtlicher Umweltbelastung entwickelt haben.

Zur Mischung der Rohstoffe mit hydrophobierenden Zusätzen gibt es die Bemühungen, durch den Zusatz naturnaher Zusätze wie Gesteinsmehl oder Wasserglas (DE-OS 43 16 901), die biologische Abbaubarkeit zu erhalten, aber gleichzeitig das Quellverhalten der genannten Rohstoffe zu verringern und die mechanischen Eigenschaften zu verbessern. Während der Zusatz von Gesteinsmehl technisch aufwendig ist und zu keinen signifikanten Verringerungen der Wasseraufnahme führt, liefert der Zusatz von stark alkalischem Wasserglas, auch nach Neutralisation mit Kohlendioxid, stark alkalische, mit Alkalicarbonat belastete Produkte, die nur für Spezialzwecke eingesetzt werden können.

Vor diesem Hintergrund ist es die Aufgabe der Erfindung, ein verbessertes Schutz- und Konsolidierungsmittel für Holz und andere lignocellulosehaltige Werkstoffe bzw. eine verbesserte Behandlungssubstanz für nachwachsende Rohstoffe , mit denen sowohl ein Langzeitschutz insbesondere gegen Schadorganismen, korrosive Medien und Feuer als auch eine dauerhafte Dimensionsstabilisierung und Verfestigung erreicht wird. Aufgabe der Erfindung ist es ferner, ein verbessertes Material aus nachwachsenden Rohstoffen, das aus einem Rohstoff auf der Basis von Stärke, Cellulose oder deren Abbauprodukten und einer Behandlungssubstanz besteht, sowie ein Verfahren zur Herstellung dieses Materials anzugeben, mit denen ein verbesserter, umweltverträglicher Schutz der Rohstoffe gegenüber Feuchtigkeit und mechanischer Beanspruchung und gegenüber bakteriellen und tierischen Schädigungen erreicht wird.

Diese Aufgabe wird durch das Schutz- und Konsolidierungsmittel gemäß Anspruch 1, das Verfahren gemäß Anspruch 4 und die in Anspruch 11 gegebenen Verwendungen gelöst. Vorteilhafte Ausführungsformen der Erfindung ergeben sich aus den abhängigen Ansprüchen.

Überraschend konnte diese Aufgabe mit einfachen Mitteln erfindungsgemäß insbesondere dadurch gelöst werden, daß zum Schutz bzw. zur Konsolidierung als Beschichtungsmaterial für Holz und andere lignocellulosehaltige Werkstoffe modifizierte Metalloxid-Organosole verwendet werden. Dies erlaubt es vorteilhafterweise, mit einem Arbeitsschritt sowohl den Langzeitschutz gegen Schadorganismen, korrosive Medien und Feuer als auch die dauerhafte Dimensionsstabilisierung und Verfestigung zu erzielen.

Gegenstand der Erfindung sind darum Schutz- und Konsolidierungsmittel für Holz und andere lignocellulosehaltige Werkstoffe auf Basis modifizierter Metalloxid-Organosole.

Metalloxid-Gele erhält man aus den entsprechenden Metalloxid-Solen durch pH-Änderung, Erwärmen oder Verdampfen des Lösungsmittels. Die Herstellung erfolgt in bekannter Weise (vgl. C. J. Brinker, G. W. Scherer, "Sol-Gel Science", Academic Press Inc., San Diego 1990) durch sauer oder basisch katalysierte Hydrolyse von Metallalkoxiden wie $(RO)_4Si$, $(RO)_4Ti$, $(RO)_3Al$, $R'-Si(OR)_3$ oder deren Gemische bei Raumtemperatur. Beispielsweise erhält man stabile $SiO_2$-Sole durch saure oder alkalische Hydrolyse eines Tetraalkoxysilans; der organische Rest R kann dabei nahezu beliebig gewählt werden.Die erfindungsgemäß verwendeten Organosole erhält man durch sauer oder basisch katalysierte Hydrolyse der entsprechenden Metallalkoxide, die z. B. nach Beschichtung auf einem Träger wie Holz dünne, stabile und transparente Gel-Filme (oder nach einer anderen, unten beschriebenen Verwendung entsprechende Gelformen) bilden (sog. Sol-Gel-Prozeß):

(1) Bildung der Metalloxid-Sole durch Hydrolyse (Sol ist das Behandlungsmittel, z.B. Konservierungsmittel), ggf. katalytisch:

$$Me(OR)_n + n/2 \ H_2O \rightarrow (MeO_m)_{sol} + n \ R0H \qquad (1)$$

(2) Sol-Beschichtung (liefert dreidimensional vernetzte Gelfilme)

$$(MeO_m)_{sol} \rightarrow (MeO_m)_{gel} \qquad (2)$$

(Me = Metall z.B. Si, Ti, B, Zr, Sn, Al , R = organischer Rest, z.B. Alkyl, Acyl, n beispielsweise gleich 4)

Die stabilen Metalloxid-Organosole bestehen im einfachsten Fall nur aus nm-kleinen Metalloxid-Späroiden in wäßrigem Alkohol (oder beliebig anderen, mit Wasser mischbaren Lösungsmitteln wie Dioxan, Aceton). Sie sind damit ökologisch vollkommen unbedenklich und ermöglichen dank ihrer nm-Dimensionen ein intensives Eindringen in die oberfächennahen Bereiche des Holzes sowie durch ihr hervorragendes Filmbildungsverhalten einen guten mechanischen, chemischen und biologischen Schutz. Außerdem wird die Entflammbarkeit des Holzes verringert.

Eine Modifizierung der Sol-Gel-Eigenschaften ist möglich:

(1) durch Mischung unterschiedlicher Metalloxid-Sole (z.B. $SiO_2$ mit $TiO_2$, $Al_2O_3$ bzw. $B_2O_3$ in beliebigem Verhältnis)

(2) durch Zusatz von organisch substituierten Trialkoxysilanen $R-Si(OR)_3$ (bis maximal 50 Gew.-% bezogen auf $Me(OR)_n$) bei der Sol-Bildung (1).

Durch diese Modifizierung werden vorrangig die mechanischen Eigenschaften der Schichten verändert, z.B. erhöhen sich Härte und Abriebfestigkeit der Schichten mit zunehmdem Al. bzw. Ti-Gehalt bzw. es steigen Flexibilität und Hydrophobie der Schichten mit zunehmendem $R-Si(OR)_3$-Einsatz.

(3) Eine besonders wichtige Modifizierung besteht darin, daß man biozide Stoffe durch ihren Zusatz vor, während oder nach der Hydrolyse-Reaktion (1) in die Metalloxidschicht (im Verhältnis 0.03 bis 3 Teile Biozid zu 1 Teil Metalloxid) einbetten kann, wobei sich z. B. durch das Biozid: Metalloxid-Verhältnis das Auswaschverhalten und die Diffusion aus der Schicht rezeptseitig steuern läßt . Das eröffnet die Möglichkeit, zugelassene Holzschutzmittel-Wirkstoffe in den ökologisch unbedenklichen Metalloxid-Trägern wirksam und technologisch einfach zu verkapseln und deren Freisetzung an die Oberfläche gezielt zu beeinflussen. Damit ist die Möglichkeit gegeben, fungizide, insektizide und bakterizide Wirkstoffe in geringster Konzentration über einen langen Zeitraum freizusetzen, um den langzeitigen äußeren Schutz des Holzes gegenüber Insekten- und Pilzbefall, der zu einem Abbau bzw. zur Zerstörung des Holzes führt, zu sichern. Für diese Zwecke ist besonders die Einbettung gesundheits- und umweltverträglicher Bor-Verbindungen (Borsäure, Natriumtetraborat, Polyborate) bzw. von Fluorosilicaten oder Gemische beider von großem Interesse.

Bislang war aufgrund ihrer guten Wasserlöslichkeit und der damit verbundenen hohen Auslaugbarkeit die Anwendung dieser Verbindungen stark eingeschränkt. Dies wird durch die Verkapselung der Wirkstoffe in die Metalloxide entscheidend verbessert. Aber auch die gegenwärtig auf dem Holzschutzsektor verwendeten z.T. in Wasser unlöslichen organischen Insektizide (wie z.B. synthetische Pyrethroide, Alkylammoniumverbindungen, Triazole oder Benzoylharnstoff-Derivate bzw. deren Gemische ) sind durch die Organolöslichkeit der Metalloxidsole miteinander verträglich und bilden ebenfalls problemlos modifizierte Metalloxidgel-Schichten, in denen der Wirkstoff homogen eingebettet ist. So behandelte Holzwerkstoffe ergeben aufgrund der effizienten Verkapselung des Wirkstoffs deutlich geringere Emissionen. Entsprechend sind in Metalloxidgelen eingekapselte Attraktantien in Lockstoff-Fallen für Insekten wesentlich länger wirksam und werden dosierter abgegeben. Durch Kombination mit Repellenzien gegen holzzerstörende Insekten kann die holzschützende Wirkung zusätzlich gesteigert werden.

Die Vorteile der Verwendung modifizierter Metalloxid-Organosole für die Holzkonservierung bestehen u.a. in folgendem:

- billige, inerte, ökologisch und physiologisch unbedenkliche Matrixmaterialien
- einfache Herstellungs- und Anwendungstechnologie
- problemlose Bildung transparenter, witterungsstabiler Filme von hoher optischer und mechanischer Qualität durch beliebige Beschichtungsverfahren wie z.B. Einstreichen, Tauchen, Sprühen, Verschäumen oder Druckimprägnierung.
- Möglichkeiten zur wirksamen Immobilisierung und Fixierung wasserlöslicher Holzschutzmittel im zu schützenden Werkstoff
- Steuerung der Wirkstoff-Freisetzung durch das Wirkstoff: Metalloxid-Verhältnis sowie durch Zusatz spezieller Additive
- Verringerung der Entflammbarkeit der behandelten Hölzer
- Möglichkeit zum gleichzeitigen Langzeitschutz, zur Stabilisierung und Maskierung von rezenten und historischen Holzobjekten ohne und mit Oberflächenvergütungsmitteln wie Polituren, Lacküberzügen, Farbfassungen und Vergoldungen.

Daraus abgeleitet ergeben sich zahlreiche Anwendungsmöglichkeiten der modifizierten Metalloxidsole als Schutz- und Konsolidierungsmittel für Holz und andere lignocellulosehaltige Werkstoffe:

- Behandlung von Holzoberflächen mit biozidhaltigen Metalloxidsolen zum vorbeugenden Schutz und zur Bekämpfung holzschädigender Organismen wie Insekten, Pilze und holzzerstörende Meerestiere.
- Behandlung von Holzwerkstoffen zur Erhöhung des Brandwiderstandes
- Einsatz zur Bekämpfung des Hausschwamms in Holz und Mauerwerk insbesondere durch den Einsatz im Bohrloch-, Patronen- und Schaumverfahren.
- Maskierung von Holzoberflächen, die mit toxischen Holzschutzmitteln kontaminiert sind, insbesondere zum Schutz vor Ausblühungen und Ausgasung.
- Versiegelung von mit Formaldehydharzen verleimten Spanplatten.
- Verfestigung beschädigter Farbfassungen auf Holz sowie Farbretuschen mit ggf. eingefärbten Metalloxidsolen.
- Festigung von insekten- und pilzgeschädigten trockenem Holz durch Imprägnierung mit den Solen ohne zusätzliches Einbringen eines Stabilisierungsmittels.
- Stabilisierung von Feucht- und Naßholz durch simultanen Austausch des Wassers gegen geeignete Sole und Umwandlung in Gele innerhalb der Holzsubstanz.
- Austausch der in Holzschutzmitteln zur Fixierung enthaltenen Chromium-Verbindungen gegen modifizierte Metalloxide.
- Anwendung der Metalloxidsole für den Langzeitschutz gegen Schadorganismen, korrosive Medien und Feuer als auch eine dauerhafte Dimensionsstabilisierung und Verfestigung bei anderen lignocellulosehaltigen Werkstoffe wie Spanplatten, Faserplatten, Karton und Papier.

Aus der Vielzahl der Möglichkeiten zur Herstellung und Anwendung von Schutz- und Konsolidierungsmittel für Holz und andere lignocellulosehaltige Werkstoffe sind einige in den unten angegebenen Ausführungsbeispielen I näher beschrieben.

Überraschenderweise konnte die Aufgabe mit einfachen Mitteln erfindungsgemäß ferner dadurch gelöst werden, daß nachwachsende Rohstoffe auf der Basis von Stärke, Cellulose oder deren Abbauprodukten (z. B. Dextran, Zucker und dgl.) durch Metalloxid-Organosole modifiziert werden. Als Modifizierungsmittel (oder Behandlungssubstanz) dienen die wie iben beschrieben hergestellte Metalloxid-Sole in einem wasserarmen oder wasserfreien organischen Lösungsmittel. Gegenstand der Erfindung sind daher insbesondere modifizierte Materialien auf der Basis von nachwachsenden Rohstoffen, die aus einem Rohstoff auf der Basis von Stärke, Cellulose oder deren Abbauprodukten und einem Metalloxid-Gel bestehen.

Die Herstellung der modifizierten Materialien aus nachwachsenden Rohstoffen ist dabei dadurch gekennzeichnet, daß Press- oder Formkörper aus Rohstoffen auf der Basis von Stärke, Cellulose oder deren Abbauprodukten mit wasserarmen oder wasserfreien Metalloxid-Organosolen durch Tauchen, Sprühen oder anderen Lackierungstechniken überschichtet und getrocknet werden oder Rohstoffe auf der Basis von Stärke, Cellulose oder deren Abbauprodukten in zerkleinerter oder pulverförmiger Form mit wasserarmen oder wasserfreien Metalloxidsolen gemischt, durch pH-Änderung oder Erwärmung geliert und getrocknet werden.

Die so hergestellten modifizierten Materialien weisen eine Reihe von Vorteilen auf. Sie sind einfach herstellbar, weisen eine beträchtlich geringere Wasseraufnahme im Vergleich mit den unmodifizierten Rohstoffen auf, sind weitgehend stabil gegenüber mechanischen Beanspruchungen, verringern die Entflammbarkeit und bieten die Möglichkeit, durch die Beladung der zur Herstellung verwendeten Metalloxid-Sole mit antibakteriellen oder fungiziden Stoffen (siehe DE-OS 43 29 279) die Materialien vor Pilz- und Schädlingsbefall zu schützen sowie durch die Beladung mit Farbstoffen und/oder Aromastoffen die Gebrauchswerteigenschaften zu erhöhen. Außerdem ist die Entsorgung der so modifizierten Materialien aus nachwachsenden Rohstoffen mit keinen Umweltbelastungen verbunden.

Bestimmte ökonomische Vorteile zur Herstellung von $SiO_2$-Solen bietet die Hydrolyse kommerzieller teilhydrolysierter Tetraalkoxysilane (Polyalkoxysilane). Die durch Säuren oder Basen katalytisierte Hydrolyse wird vorrangig bei Raumtemperatur in einem mit Wasser mischbaren organischen Lösungsmittel wie Ethanol, Propanol, Aceton, Dioxan oder dgl. durchgeführt. Höhersiedende Lösungsmittel (Siedepunkt über 100°C) wie Dimethylformamid, Glykol oder Glykolether werden verwendet, wenn z. B. aus verfahrenstechnischen Gründen beim Trocknen Wasseranteile vor dem organischen Lösungsmittel entfernt werden sollen. Durch die zugesetzte Menge verdünnter Säure oder Lauge vor der Hydrolyse wird der Wassergehalt im Metalloxid-Sol festgelegt. Durch den Zusatz genauer stöchiometrischer Mengen erhält man wasserfreie Sole. Solche wasserfreien Sole sind besonders dann von Vorteil, wenn man z.B. stark quellende oder wasserlösliche Formteile überschichtet, um Formänderungen oder Auflösungserscheinungen zu unterdrükken. Weiterhin kann man durch das Mengenverhältnis Lösungsmittel zu Metallalkoxid vor und während der Hydrolyse die Konzentration des Metalloxids im Sol einstellen. Zur Herstellung der modifizierten Materialien aus nachwachsenden Rohstoffen erwiesen sich Metalloxid-Konzentrationen von 1 bis 25 Gew.-% Metalloxid im Sol als besonders geeignet. Zur Variation des Viskositäts- und Gelbildungsverhaltens der Metalloxid-Sole sowie zur Verbesserung der mechanischen Eigenschaften (z.B. der Elastizität, Oberflächengüte) der damit hergestellten modifizierten Materialien aus nachwachsenden Rohstoffen können dem Metalloxidsol bis zu 50 Gew.-% lösliche Polymere zugesetzt werden. Hierfür eignen sich unter dem Aspekt der Kompostierbarkeit und Umweltfreundlichkeit des modifizierten Materials aus nachwachsenden Rohstoffen besonders Cellulose-Derivate (Celluloseester und -ether), lösliche Proteine wie Gelatine sowie alkohollösliche Naturharze (z.B. Kollophonium) wie sie in Klarlacken im Handel verfügbar sind. Ebenso bewirkt ein Zusatz trocknender Öle wie Leinöl oder Holzöl bis zu 30 Gew.-% (bezogen auf Gew.-% Metalloxid) zu den Metalloxid-Solen eine Verbesserung der physikalisch-mechanischen Eigenschaften der modifizierten Materialien.

Für die Modifizierung von Formkörpern aus nachwachsenden Rohstoffen mit den genannten Metalloxid-Solen können problemlos bekannte Beschichtungstechnologien wie Tauchen, Sprühen, Begießen, Pinseln angewendet werden, da die Metalloxid-Sole gute Filmbildungseigenschaften zeigen und unmittelbar nach der Beschichtung durch die teilweise Entfernung des Lösungsmittels zu Metalloxidgelen erstarren. Beim weiteren Trocknen werden die Formkörper durch einen festen Metalloxid-Film eingekapselt. Dadurch verringert sich drastisch das Wasseraufnahmevermögen und die mechanische Stabilität steigt. Auf diese Weise lassen sich erfolgreich Formteile aus Holz, Altpapier, Pellets aus Stroh oder Miscanthus sinensis sowie Verpackungschips, die durch einen Extrusionsprozeß aus unterschiedlichen Getreidestärken erhalten wurden, modifizieren.

Eine zusätzliche Modifizierung ist möglich, indem die Metalloxid-Sole vor der Beschichtung mit Zusatzstoffen beladen werden, die die Gebrauchswerteigenschaften zusätzlich erhöhen. Hierbei können Stoffe mit antibakterieller und fungizider Wirkung wie Carbonsäuren, Phenolderivate, Fluor- und Borverbindungen verwendet werden sowie bei Bedarf Farbstoffe oder Aromastoffe zugesetzt werden. Der Zusatz zum Metalloxidsol bewirkt, daß die genannten Wirkstoffe in dem schützenden Metalloxidgel-Film eingekapselt und damit sehr langsam und stark verzögert freigesetzt werden. Dieses Verhalten bewirkt einen langzeitigen Schutz z.B. gegenüber biologischen Schädigungen. Derartige Zubereitungen haben damit z.B. den Charakter neuartiger, umweltfreundlicher Holzschutzmittel.

Zur Modifizierung zerkleinerter oder pulverförmiger Produkte aus nachwachsenden Rohstoffen wie Sägespänen, Faserspänen aus Stroh, Miscanthus sinensis oder Stärkemehl (z. B. Maismehl) werden diese Produkte mit den Metalloxidsolen mechanisch vermischt. Die Gewichtsanteile des Metalloxids im modifizierten Material liegen dabei vorzugsweise im Bereich von 0.1...50 % Metalloxid. Die gut gemischte Suspension wird durch Neutralisation, Erwärmen oder Lösungsmittelentfernung geliert. Die anschließende Trocknung des modifizierten Gels liefert Granulate, die als Pressmassen ohne weitere Zusätze zu Formteilen weiterverarbeitet werden können. Die so gewonnenen Formteile zeichnen sich durch eine hohe mechanische Stabilität und eine geringe Wasseraufnahme aus. Die Herstellung der Preßmassen kann unter Verwendung von Preßdrucken von 200 bis 3000 kp, vorzugsweise von 1000 bis 2000 kp erfolgen.

Das erfindungsgemäße modifizierte Material kann ferner aus recycleten Produkten auf der Grundlage von nachwachsenden Rohstoffen (z. B. Altpapier) gebildet sein und/oder weitere Füllstoffe enthalten.

Die erfindungsgemäß gebildeten Formteile oder Preßmassen sind biologisch abbaubar und lassen sich vorteilhaft für die Lebensmittelverpackung und den Lebensmittelservice, für den Gartenbau und die Landwirtschaft sowie für die Verpackungs- und Bauindustrie (z.B. Formteile, leichtgewichtige Fassadenelemente, Dämmstoffe, Dämmchips, Faserplatten, Preßpappe) verwenden.

Aus der Fülle der Möglichkeiten zur Herstellung modifizierter Materialien aus nachwachsenden Rohstoffen sind einige unten beschrieben (Ausführungsbeispiele II).

Erfindungsgemäß werden angegeben: ein modifiziertes Material, das einen Rohstoff, der durch einen biologischen Wachstumsvorgang gebildet ist, und als Modifizierungsmittel eine Behandlungssubstanz enthält, wobei der Rohstoff auf der Basis von Stärke, Cellulose und/oder deren Abbauprodukten und die Behandlungssubstanz durch ein Metalloxid-Sol gebildet sind, oder Behandlungsmittel für Holz oder andere lignocellulosehaltige Werkstoffe, wobei das Behandlungsmittel 2 bis 30 Teile eines Metalloxid-Sols und 98 bis 70 Teile eines organischen oder wäßrig-organischen Lösungsmittels enthält. Vorteilhafterweiser enthält das Metalloxid-Sol mindestens einen Zusatz, der aus der Gruppe ausgewählt ist, die antibakterielle Zusätze, fungizide Zusätze, Farbstoffe, Aromastoffe, lösliche Polymere, Hydrolyseprodukte von organisch substituierten Trialkoxysilanen, Wirkstoffe gegen holzschädigende Organismen, anorganische Biozide, wie Borsäure, deren Salze oder Polyborate, Fluorosilicate, und organische Biozide, wie synthetische Pyrethroide, Alkylammoniumverbindungen, Triazole oder Benzoylharnstoff-Derivate umfaßt, wobei im Fall der löslichen Polymere bis zu 50 Gew.-% in Bezug auf das Metalloxid-Sol enthalten sind und im Fall des Biozidzusatzes das Mengenverhältnis 0.03 bis 3 Teile Biozid zu 1 Teil Metalloxid beträgt. Ferner wird Verfahren zur Herstellung eines modifizierten Materials angegeben, das einen Rohstoff, der durch einen biologischen Wachstumsvorgang gebildet ist, und als Modifizierungsmittel eine Behandlungssubstanz enthält, mit den Schritten: (i) Bildung eines wasserarmen oder wasserfreien Metalloxid-Sols in wasserarmen oder wasserfreien organischen Lösungsmitteln, (ii) Versetzen des Rohstoffes, der auf der Basis von Stärke, Cellulose und/oder deren Abbauprodukten gebildet ist, mit dem Metalloxid-Sol, und (iii) Gelierung des Sols und Trocknung des Materials. Vorteilhafterweise wird der Rohstoff durch Press- oder Formkörper gebildet und Schritt (ii) umfaßt eine Überschichtung der Rohstoffoberfläche mit dem Metalloxid-Sol, z. B. durch Tauchen, Besprühen, Bepinseln oder dergleichen. Alternativ wird der Rohstoff durch eine pulverförmige Komponente gebildet und Schritt (ii) umfaßt eine Zumischung des Metalloxid-Sols in die pulverförmige Komponente. In diesem Fall wird das modifizierte Material nach Schritt (iii) zu stabilen Formkörpern, z. B. Pellets, gepreßt. Das Pressen erfolgt bei einem Druck in einem Bereich von 200 bis 3000 kp, vorzugsweise von 1000 bis 2000 kp. Die erfindungsgemäßen Behandlungs-, Schutz- oder Konsolidierungsmittel werden für den langzeitigen Schutz gegen Schadorganismen, gegen korrosive Medien oder Feuer; besonders bevorzugterweise zur Versiegelung oder Maskierung von Holzoberflächen; zur Restaurierung von Holzoberflächen; zur dauerhaften Dimensionsstabilisierung und Verfestigung von Holz- oder Formkörperoberflächen; oder zum Ersatz von in Holzschutzmitteln zur Fixierung enthaltenen Chromium-Verbindungen verwendet.

**Ausführungsbeispiele I (zu Holzschutzmitteln):**

**I. 1. Herstellung der Metalloxid-Sole**

Precursor und Lösungsmittel werden gemischt und unter Rühren die angebenen Zusätze langsam zugefügt. Die Lösung wird 20 Std. bei Raumtemperatur gerührt und kann dann für Holzschutzzwecke verwendet werden.

Tabelle 1

| Nr. | Precursor | Lösungsmittel | Zusatz |
|---|---|---|---|
| A | 20 ml Dynasil 220[1] | 15 ml Ethanol | 5ml 0.01 N HCl |
| B | 4.16 g TEOS [2] 5.68 g Ti(OPr)$_4$ [3] | 80 ml Ethanol | 2 ml 1 N HNO$_3$ |
| C | 6.24 g TEOS 2.04 g Al (OPr)$_3$ [3] | 80 ml Ethanol | 2 ml 1N HCl |
| D | 10 g TEOS 2.2 g Ti(OPr)$_4$ 3 g GLYMO [4] | 50 ml Ethanol | 3ml 0.02 M HCl 0.5 g Pentaerythrit |
| E | 45 ml TEOS | 45 ml Aceton | 7.5 ml 0.01 N HCl |
| F | 10 ml TEOS | 40 ml Ethanol | 20 ml 0.01 N HCl 2.16 g Borsäure |
| G | 10 ml TEOS | 40 ml Ethanol | 20 ml 0.005 N NaOH 2.8 g Borax 2.0 g Borsäure |
| H | 10 ml TEOS | 40 ml Ethanol | 20 ml 0.01 N HCl 2.16 g Borsäure [5] 2.50 g MgSiF$_6$ |
| K | 10 ml TEOS | 40 ml Ethanol | 5 ml 0.01 N HCl 0.1 g Permethrin[6] |

1) Dynasil 220 = Ethylpolysilikat/Hüls AG
2) TEOS = Tetraethoxysilan
3) Pr = Propyl
4) GLYMO = 3-Glycidyloxypropyl-trimethoxysilan
5) Borax = Natriumtetraborat Decahydrat
6) Permethrin = 3-(2,2-Dichlorvinyl)-2,2-dimethylcyclopropancarbonsäure- 3-phenoxybenzylester; synthetisches Pyrethroid

**I. 2. Untersuchung zur Verfestigung und Dimensionstabilisierung**

Prüfklötzchen (15 x 15 x 100 mm$^3$) aus Fichte und Kiefer wurden durch Tauchen mit den in Tab. 1 aufgeführten Solen imprägniert. Die beschichteten Prüfklötzchen wurden anschließend an der Luft und 30 min im Trockenschrank bei 50°C getrocknet. Als Maß für die Verfestigung und Dimensionsstabilisierung wurde die Quellung durch die gravimetrische Bestimmung der Wasseraufnahme ermittelt. Dazu wurden 70 mm des Prüfklötzchens 30 min. bei 20°C und 70°C in 3%ige Essigsäure getaucht und die Masse vor ($m_v$) und nach der Behandlung ($m_n$) bestimmt. Die Berechnung der Wasseraufnahme erfolgte nach WA (in %) = 100 ($m_n$ - $m_v$)/ $m_v$ . Die Ergebnisse zeigen die deutliche Verringerung der Quellung durch die Behandlung der Prüfklötzchen mit Metalloxidsolen. Außerdem ist die Entflammbarkeit der behandelten Schichten deutlich reduziert.

Tabelle 2

| Wasseraufnahme (WA in %) von mit Metalloxidsolen beschichteten Prüfklötzchen | | | | |
|---|---|---|---|---|
| Beschichtung mit Sol (vgl. Tab. 1) | Kiefer | | Fichte | |
| | 20°C | 70°C | 20°C | 70°C |
| unbehandelt | 11.83 | 17.02 | 3.97 | 8.5 |
| A | 4.37 | 7.51 | 2.96 | 3.91 |
| B | 4.82 | 8.28 | 2.69 | 3.71 |
| C | 3.80 | 6.94 | 2.11 | 3.55 |
| D | 1.12 | 1.77 | 1.20 | 1.92 |
| E | 3.40 | 6.85 | 2.55 | 3.22 |

**I.3. Nachweis der Holzschutzwirkung der modifizierten Metalloxidsole**

(a) Analytischer Nachweis der langsamen Freisetzung des eingebetteten Wirkstoffs Borsäure aus einem Siliciumdioxid-Gel

Ein Prüfbrett mit einer Oberfläche von 315 $cm^2$ wurde durch Aufstreichen einseitig mit dem Sol F(Tab. 1) beschichtet und nach Vortrocknen an der Luft 1 Std. bei 50°C im Trockenschrank getrocknet. Anschließend wurde der Prüfling in einer Glaswanne mit 600 ml intensiv gerührten Wassers behandelt und in bestimmten Abständen Proben gezogen. Der Borgehalt der Proben wurde emissionsspektroskopisch durch ICP (inductively coupled plasma) bestimmt. Die folgenden Werte dokumentieren die langsame Freisetzung des Wirkstoffs Borsäure:

| | |
|---|---|
| 10 min | 2.84 mg/l Bor |
| 30 min | 3.56 mg/l Bor |
| 60 min | 4.68 mg/l Bor |
| 180 min | 5.72 mg/l Bor |

(b) Nachweis der holzschützenden Wirkung der modifizierten Metalloxidsole gegenüber holzzerstörenden Pilzen

Prüfkörper aus Kiefernsplintholz (15 x 25 x 50 $mm^3$) wurden wahlweise mit den Systemen F-H (Tab. 1) behandelt und ihre Resistenz gegenüber einem Angriff durch holzzerstörende Pilze (Ascomyceten und Basidiomyceten) getestet. Für einen wirksamen Schutz waren Wirkstoffkonzentrationen zwischen 3.5 und 8.4 $kg/m^3$ Holz und bei Wasserbelastung zwischen 4.5 und 15.5 $kg/m^3$ Holz ausreichend.

(c) Bestimmung der bekämpfenden Wirksamkeit der modifizierten Metalloxidsole gegenüber holzschädigenden Insekten

In Prüfkörpern aus Kiefernholz nach EN 22 wurden Altlarven des Hausbockkäfers (Hydrotrupes bajulus L) eingesetzt und die Proben nach dem Einnagen der Larven durch Streichen der Holzoberfläche mit den Systemen F-K (wahlweise) entspr. Tab. 1 behandelt. Bei einer Auftragsmengevon 250 - 450 $g/m^2$ lag die Sterberate der Larven nach 72 Wochen bei 85 - 100 %.

(d) Nachweis der vorbeugenden Wirkung der modifizierten Metalloxidsole gegenüber holzschädigenden Insekten

Für die Prüfung nach EN 46 wurden Proben aus Kiefernsplintholz (15x25x50 mm$^3$) verwendet. Als Testorganismen wurden Eilarven aus frischen Gelegen des Hausbockkäfers (Hylotrupus bajulus L.) benutzt. Die Eilarven gelangten auf eine der wahlweise mit den Systemen F - K gestrichenen Mantelflächen (200 - 250 g/m$^2$). Die Einnagerate wurde nach 4 Wochen, die Anzahl der im Holz vorhandenen lebenden und toten Tieren nach 12 Wochen bestimmt. Die Mortalität der Versuchstiere betrug sowohl bei den Proben ohne als auch mit Beanspruchung durch Auslaugung 100 %.

**I. 4. Nachweis des Maskierungseffektes der modifizierten Metalloxidsole**

(a) Prüfbrettchen (20x35x2.5 cm$^3$), die mit den Schadstoffen DDT, Lindan und/oder Pentachlorphenol (PCP) kontaminiert waren, wurden wahlweise mit den Systemen A - E behandelt. Die Auftragsmenge lag im mehrmaligen Streichverfahren bei 200 - 350 g/m$^2$. Durch die Behandlung wurden die Emissionen bis zu 95 % reduziert. Beispielsweise ließ sich eine Raumluftkonzentration von 3.87 µg PCP/m$^3$ Luft auf 0.19 µg/m$^3$ senken.

(b) Spanplatten (20x35x2 cm$^3$), die mit Formaldehydharzen als Bindemittel hergestellt wurden, wurden allseitig wahlweise mit den Systemen A - E bestrichen. Die Auftragsmenge lag zwischen 350 - 500 g/m$^2$. Nach Trocknen der Prüfbrettchen sank die Formaldehyd-Konzentration in der Raumluft der Prüfkammer innerhalb von 24 Stunden von 420 µg/m$^3$ auf 20 µg/m$^3$.

**Ausführungsbeispiele II (Modifizierte nachwachsende Rohstoffe)**

**II.1. Herstellung der Metalloxid-Sole**

**(A) Si0$_2$-Sol**

50 ml Tetraethoxysilan, 200 ml Ethanol (Ethylglykol, Dioxan) und 100 ml 0,01N Salzsäure (oder 5 % Ammoniak) werden 20 Std. bei Raumtemperatur gerührt.

**(B) Si0$_2$-Sol (aus Polyalkoxysilanen)**

200 ml Dynasil NT 220/Hüls AG, 150 ml Ethanol und 50 ml 0,01N Salzsäure werden 20 Std. bei Raumtemperatur gerührt.

**(C) wasserfreies Si02-Sol**

90 ml Tetraethoxysilan, 180 ml wasserfreies Ethanol, 14.5 ml 0.01N Salzsäure werden 20 Std. bei Raumtemperatur gerührt.

**(D) Sol aus Si0$_2$/MeSi0$_x$**

35 ml Tetraethoxysilan, 15 ml Trimethoxymethylsilan werden in 200 ml Ethanol und 100 ml 0,01 N Salzsäure 20 Std. bei Raumtemperatur gerührt.

**(E) Sol aus Si0$_2$/Ti0$_2$**

Zu 45 ml Tetraethoxysilan, 5 ml Tetraisopropylorthotitanat in 200 ml Ethanol werden bei Raumtemperatur langsam 10 ml 0,1 N Salzsäure zugetropft und 20 Std. gerührt.

**(F) Sol aus Si0$_2$/Al$_2$0$_3$**

In 45 ml Tetraethoxysilan und 200 ml Ethanol werden unter Erwärmen 5 g Aluminiumtriisopropylat gelöst. Anschließend werden bei Raumtemperatur unter Rühren 10 ml 0,1 Salzsäure langsam zugetropft. Die klare Lösung beginnt nach ca. 3 Std. langsam zu gelieren. Sie wird dann unmittelbar weiterbearbeitet.

**II.2. Modifizierung von Formkörpern aus nachwachsenden Rohstoffen durch Metalloxid-Gele**

Formkörper aus den in Tabelle 3 aufgeführten nachwachsenden Rohstoffen werden durch Tauchen (T), Sprühen (S) oder Pinseln (P) mit den oben aufgeführten Metalloxidsolen behandelt. Anschließend werden die modifizierten Formkörper mehrere Stunden an der Luft bzw. bei 50°C im Trockenschrank getrocknet.

Zur Bestimmung der Wasseraufnahme werden die Formkörper je nach Material in Wasser oder 3 % Essigsäure zwischen 3 und 30 min gewässert, die Wasseraufnahme gravimetrisch bestimmt und mit der Wasseraufnahme der unbehandelten Probe verglichen. Ergebnisse vgl. Tabelle 3.

## II.3. Modifizierung von zerkleinerten und pulverförmigen Produkten aus nachwachsenden Rohstoffen

(a) Modifizierung von Holzmehl

5 g feingesiebtes Holzmehl werden unter starken Rühren in 50 ml ethanolhaltiges Sol A eingetragen. Nachdem eine gleichmäßige Durchmischung erreicht wurde, werden 15 ml 1 % Ammoniak-Lösung zugetropft. Nach 20 min tritt Gelierung ein. Das feste Gel wird zerkleinert und 12 Std. im Abzug an der Luft getrocknet. Das gebildete Granulat (8,1 g) ließ sich bei einem Preßdruck von ca. 1800 kp/cm$^2$ zu stabilen Pellets pressen.

(b) Modifizierung von Mikrospänen aus Miscanthus sinensis

5 g Mikrospänen aus Miscanthus sinensis werden unter starken Rühren in 50 ml Sol B eingetragen. Nachdem eine gleichmäßige Durchmischung erreicht wurde, wurden 10 ml 1 % Ammoniak-Lösung zugetropft. Nach kurzer Zeit tritt Gelierung ein. Das feste Gel wird zerkleinert und 12 Std. im Abzug an der Luft getrocknet. Das gebildete Granulat (10.4 g) ließ sich bei einem Preßdruck von ca. 1800 kp/cm$^2$ zu stabilen Pellets pressen.

Tabelle 3

| **Modifizierung von Formkörpern aus nachwachsenden Rohstoffen durch Metalloxid-Gele** (Arbeitsvorschrift vgl. Beispiel 1) | | | |
|---|---|---|---|
| Nr. | Form | nachwachs. Rohstoff | modifizier. Metalloxid-Sol | % Wasseraufn. (unmod.=100%) |
| (a) | Prüfklötzchen | Holz/Kiefer | B /Tauchen (T) | 37 (20°C) |
| | | | | 44 (70°C) |
| (b) | " | " | B /Pinseln (P) | 42 (20°C) |
| (c) | " | " | B+20% HPC[1)](T) | 28 (20°C) |
| (d) | " | " | B+10% Benzoe säure(T) | 36 (20°C) |
| (e) | " | " | C/ (T) | 47 (20°C) |
| (f) | " | " | D/ (P) | 13 (20°C) |
| (g) | " | " | E/ (T) | 32 (20°C) |
| (h) | " | " | F/ (T) | 34 (20°C) |
| (i) | " | Holz/Fichte | B/ Sprühen | 44 (70°C) |
| (j) | Verpackungschips | Altpapier /Stärke | B/ (T) | 38 (20°C) |
| (k) | " | " | C/ (T) | 53 (20°C) |
| (l) | Pressplatten | Pappe | A/ (P) | 81 (20°C) |
| (m) | " | " | D/ (P) | 79 (20°C) |
| (n) | Spatel | Roggenstärke (Extrusionsmaterial) | B/ (P) | 49 (20°C) |
| (o) | " | " | B/ (T) | 43 (20°C) |
| (p) | " | " | C/ (P) | 50 (20°C) |
| (q) | " | " | B+11% Kolophonium | 40 (20°C) |
| (r) | " | " | A mit Dioxan + 11 %Gelatine | 34 (20°C) |

1) HPC : Hydroxypropylcellulose

**Patentansprüche**

1. Schutz- und Konsolidierungsmittel für nachwachsende Rohstoffe auf der Basis von Stärke, Cellulose und/oder deren Abbauprodukten bestehend aus einem modifizierten Metalloxid-Organosol.

2. Schutz- und Konsolidierungsmittel gemäß Anspruch 1, bei dem das modifizierte Metalloxid-Organosol $SiO_2$, $Al_2O_3$ oder $TiO_2$ oder deren Gemische in einem wasserlöslichen organischen Lösungsmittel, ggf. gemischt mit Wasser, enthält.

3. Schutz- und Konsolidierungsmittel gemäß Anspruch 1 oder 2, bei dem das modifizierte Metalloxid-Organosol mindestens einen Zusatz enthält, der aus der Gruppe ausgewählt ist, die biozide Zusätze, Farbstoffe, Aromastoffe und lösliche Polymere umfaßt, wobei im Fall der löslichen Polymere bis zu 50 Gew.-% in Bezug auf das Metalloxid-Sol enthalten sind.

4. Verfahren zum Schutz und zur Konsolidierung nachwachsender Rohstoffe auf der Basis von Stärke, Cellulose und/oder deren Abbauprodukten
        gekennzeichnet durch die Schritte

    (i) Bildung eines wasserarmen oder wasserfreien modifizierten Metalloxid-Organosols gemäß einem der vorhergehenden Ansprüche,
    (ii) Behandeln des Rohstoffes mit dem modifizierten Metalloxid-Organosol, und
    (iii) Gelierung des Sols und Trocknung.

5. Verfahren gemäß Anspruch 4, bei dem der Rohstoff durch Press- oder Formkörper gebildet wird und Schritt (ii) eine Überschichtung der Rohstoffoberfläche mit dem modifizierten Metalloxid-Organosol, z. B. durch Tauchen, Besprühen, Bepinseln oder dergleichen, umfaßt.

6. Verfahren gemäß Anspruch 4, bei dem der Rohstoff durch eine pulverförmige Komponente gebildet wird und Schritt (ii) eine Mischung mit dem modifizierten Metalloxid-Organosol umfaßt.

7. Verfahren gemäß Anspruch 6, bei dem der modifizierte Rohstoff nach Schritt (iii) zu stabilen Formkörpern, z. B. Pellets, gepreßt wird.

8. Schutz- und Konsolidierungsmittel für Holz oder andere lignocellulosehaltige Werkstoffe, dadurch gekennzeichnet, daß das Schutz- und Konsolidierungsmittel ein modifiziertes Metalloxid-Organosols mit 2 bis 30 Gew.-% Metalloxid in einem organischen oder wäßrig-organischen Lösungsmittels enthält.

9. Schutz- und Konsolidierungsmittel gemäß Anspruch 8, bei dem das Metalloxid-Organosol $SiO_2$, $Al_2O_3$, $TiO_2$ oder $B_2O_3$ oder deren Gemische enthält.

10. Schutz- und Konsolidierungsmittel gemäß Anspruch 8 oder 9, bei dem das Metalloxid-Organosol mindestens einen Zusatz enthält, der aus der Gruppe ausgewählt ist, die Hydrolyseprodukte von organisch substituierten Trialkoxysilanen, Wirkstoffe gegen holzschädigende Organismen, anorganische Biozide, wie Borsäure, deren Salze oder Polyborate, Fluorosilicate, und organische Biozide, wie synthetische Pyrethroide, Alkylammoniumverbindungen, Triazole oder Benzoylharnstoff-Derivate, umfaßt, wobei im Fall des Biozidzusatzes das Mengenverhältnis 0.03 bis 3 Teile Biozid zu 1 Teil Metalloxid beträgt.

11. Verwendung des Behandlungsmittel gemäß einem der Ansprüche 8 bis 10 für den langzeitigen Schutz gegen Schadorganismen, gegen korrosive Medien oder Feuer; zur Versiegelung oder Maskierung von Holzoberflächen; zur Restaurierung von Holzoberflächen; zur dauerhaften Dimensionsstabilisierung und Verfestigung von Holz- oder Formkörperoberflächen; oder zum Ersatz von in Holzschutzmitteln zur Fixierung enthaltenen Chromium- Verbindungen.